(19) Europäisches Patentamt
European Patent Office
Office européen des brevets

(11) **EP 2 964 937 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
*F02D 41/14* *(2006.01)*      *F02D 41/12* *(2006.01)*
*F02D 41/24* *(2006.01)*

(21) Anmeldenummer: **14700177.0**

(22) Anmeldetag: **09.01.2014**

(86) Internationale Anmeldenummer:
**PCT/EP2014/050262**

(87) Internationale Veröffentlichungsnummer:
**WO 2014/135287 (12.09.2014 Gazette 2014/37)**

(54) **VERFAHREN UND VORRICHTUNG ZUR BESTIMMUNG DES LAMBDA-WERTES MIT EINER BREITBAND-LAMBDA-SONDE EINER BRENNKRAFTMASCHINE INSBESONDERE EINES KRAFTFAHRZEUGS**

METHOD AND DEVICE FOR DETERMINING THE LAMBDA VALUE WITH A BROADBAND LAMBDA SENSOR OF AN INTERNAL COMBUSTION ENGINE, PARTICULARLY OF A MOTOR VEHICLE

PROCÉDÉ ET DISPOSITIF DE DÉTERMINATION DE LA VALEUR LAMBDA D'UN MOTEUR À COMBUSTION INTERNE, EN PARTICULIER D'UN VÉHICULE AUTOMOBILE, AU MOYEN D'UNE SONDE LAMBDA À LARGE BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2013 DE 102013204049**

(43) Veröffentlichungstag der Anmeldung:
**13.01.2016 Patentblatt 2016/02**

(73) Patentinhaber: **Robert Bosch GmbH**
**70442 Stuttgart (DE)**

(72) Erfinder:
• **MICHALSKE, Andreas**
  **70806 Kornwestheim (DE)**
• **HORN, Christian**
  **73732 Esslingen (DE)**

(56) Entgegenhaltungen:
WO-A1-2008/071500        DE-A1- 19 831 748
DE-B3-102006 011 722        US-A1- 2010 236 532

## Beschreibung

Die Erfindung betrifft ein Verfahren und eine Vorrichtung zur Bestimmung des Lambda-Wertes mit einer Breitband-Lambda-Sonde einer Brennkraftmaschine insbesondere eines Kraftfahrzeugs gemäß den Oberbegriffen der jeweiligen unabhängigen Ansprüche. Weiterhin betrifft die Erfindung ein Computerprogramm, das alle Schritte des erfindungsgemäßen Verfahrens ausführt, wenn es auf einem Rechengerät oder einer Steuereinrichtung abläuft. Schließlich betrifft die vorliegende Erfindung ein Computerprogrammprodukt mit Programmcode, der auf einem maschinenlesbaren Träger gespeichert ist, zur Durchführung des erfindungsgemäßen Verfahrens, wenn das Programm auf einem Rechengerät oder einer Steuereinrichtung ausgeführt wird.

Stand der Technik

Eine Breitband-Lambda-Sonde ist beispielsweise aus der DE 102 16 724 C1 bekannt. Die Sonde dient zur Bestimmung der Sauerstoffkonzentration in Abgasen von Brennkraftmaschinen, um ein Steuersignal zur Einstellung eines Kraftstoff-Luft-Gemischs zu erhalten, mit dem die Brennkraftmaschine betrieben wird. Eine solche Lambdasonde besitzt eine Mess- bzw. Nernstzelle mit einer Messelektrode und einer Referenzelektrode, die auf einem Festelektrolyten angeordnet sind, sowie eine Pumpzelle mit einer Aussenelektrode und einer Innenelektrode (auch "innere Pumpelektrode" genannt). Die Innenelektrode der Pumpzelle ist zusammen mit der Messelektrode der Nernstzelle in einem Messraum angeordnet, der über eine Diffusionsbarriere mit dem Abgas der Brennkraftmaschine in Verbindung steht. Die Aussenelektrode ist mit einer porösen Schutzschicht überdeckt und direkt dem Abgas ausgesetzt.

Zum Betrieb der Lambdasonde ist diese mit einem Steuergerät verbunden, das seinerseits Steuersignale zur Einstellung des Kraftstoff-Luft-Gemischs in der Brennkraftmaschine generiert. Die Nernstzelle ist über zur Messelektrode und Referenzelektrode gehörende Klemmen an das Steuergerät angeschlossen. Zwischen diesen Klemmen ist eine Nernstspannung abnehmbar, welche vom Verhältnis der Sauerstoffkonzentrationen abhängt, denen die Messelektrode und die Referenzelektrode ausgesetzt sind. Die Pumpzelle ist über zur Innenelektrode und Außenelektrode gehörende Klemmen an das Steuergerät angeschlossen, an denen eine Pumpspannung anliegt. Das Steuergerät besitzt eine Regelschaltung, mit der die Pumpspannung in Abhängigkeit von der Nernstspannung eingestellt wird.

Ein Verfahren und eine Vorrichtung zur Steuerung einer Brennkraftmaschine mittels einer solchen Lambda-Sonde ist beispielsweise aus der DE-OS 42 08 002 bekannt. Dabei wird aus einem erfassten Lambda-Wert (Verhältnis Luft zu Kraftstoff) und einem Signal bezüglich der zugeführten Luftmasse die tatsächlich eingespritzte Kraftstoffmenge berechnet, welche dann mit einem Signal bezüglich der einzuspritzenden Kraftstoffmenge verglichen wird. Ausgehend von der Differenz zwischen diesen beiden Werten wird ein Pumpenkennfeld einer Einspritzpumpe adaptiert bzw. korrigiert. Mit dem so korrigierten Pumpenkennfeld entspricht die einzuspritzende Kraftstoffmenge der tatsächlich eingespritzten und stellt so ein sehr genaues Lastsignal zur Verfügung, z.B. ein für eine Abgasrückführung erforderliches Lastsignal.

Bei Einzelzylinder-Einspritzsystemen ist anstelle des genannten Pumpenkennfeldes ein Ansteuerdauer-Kennfeld für die Einspritzventile vorgesehen. Darin ist, abhängig von der einzuspritzenden Kraftstoffmenge, hinterlegt, wie lange die Einspritzventile mit einem elektrischen Signal beaufschlagt werden, um eine bestimmte Öffnungs- bzw. Einspritzdauer zu erzielen. Ferner ist beispielsweise aus der DE 103 31 159 A1 bekannt, dass mit der berechneten Abweichung zwischen einzuspritzender und eingespritzter Kraftstoffmenge auch oder alternativ in die Luftmenge eingegriffen werden kann, um das Kraftstoff-Luft-Gemisch zu korrigieren.

Ferner ist aus der DE 198 31 748 A1 bekannt, zur Bestimmung der Ist-Frischluftmasse nicht nur den Massenstrom der feuchten Frischluft mittels eines Luftmassenmessers zu erfassen, sondern diesen um den Wasserdampfmassenstrom zu korrigieren, da der gleiche Luftmassenstrom bei feuchter Frischluft einen geringeren Sauerstoffmassenstrom für die Verbrennung liefert als bei trockener Frischluft. Außerdem hängt das für eine optimale Verbrennung notwendige Luft-Kraftstoff-Verhältnis auch von der Luftfeuchtigkeit (im Folgenden "Luftfeuchte") ab, da bei großer Luftfeuchte ein Teil der Wirkung der Abgasrückführung bereits vorweggenommen wird und daher bei großer Luftfeuchte ein größerer Lambda-Wert als bei geringer Luftfeuchte als günstig anzusehen ist. Dies beruht insbesondere darauf, dass durch die Luftfeuchte die Temperatur im Brennraum reduziert wird. Wegen des feuchteabhängigen Sauerstoffgehalts von Frischluft und des Feuchteeinflusses auf die Verbrennungstemperatur ist in der DE 198 31 748 A1 vorgesehen, auch den Sollwert der Frischluftmasse in Abhängigkeit der Luftfeuchte zu wählen.

Gemäß der DE 198 31 748 A1 wird der Feuchtigkeitsgehalt der Luft mittels eines Feuchtesensors erfasst und auf der Grundlage der erfassten Feuchte eine Luftmassenkorrektur der Ist-Frischluftmasse, eine Lambda-Korrektur sowie die Sollwertberechnung für die Frischluftmasse durchgeführt. Bei der Luftmassenkorrektur der Ist-Frischluftmasse werden zusätzlich durch die Anwesenheit des Wasserdampfs bedingte Messfehler des Luftmassenmessers berücksichtigt.

Wie aus der DE 10 2005 050 269 A1 weiter bekannt, erfolgt die Umrechnung der gemessenen Sauerstoffkonzentration in das genannte Luft-Kraftstoff-Gemischverhältnis (entspricht dem Wert Lambda) üblicherweise gemäß der nachfolgend beschriebenen "Pischinger-Formel" (Formel (1)). Der sich ergebende Lambda-Wert wird dann in DE-OS 42 08 002 und DE 198 31 748 A1 von einer Kraftstoffmengenberechnung verwendet, um die eingangs genannte Adaption des Pumpenkennfeldes einer Einspritzpumpe durchzuführen.

Der von der Lambda-Sonde gelieferte Messstrom ist proportional zum Sauerstoff- oder Fettgasgehalt im Abgas. Aufgrund von herstellungsbedingten Streuungen besitzt jeder derartige Sensor einen individuellen Proportionalitätsfaktor. Um dennoch für alle Sonden die gleiche Kennlinie, d.h. den gleichen Messstrom bei einer bestimmten Abgaszusammensetzung, zu erhalten, kann ein individueller Abgleich in der Sensorfertigung vorgesehen sein, z.B. mittels eines elektrischen Abgleichwiderstandes. Aufgrund von Alterungseffekten und Umgebungseinflüssen kann sich der Proportionalitätsfaktor zudem ändern. Die Abweichung des Proportionalitätsfaktors einer Sonde (mit oder ohne Abgleich in der Sensorfertigung) vom Nominalwert wird daher üblicherweise und überwiegend in DieselBrennkraftmaschinen mit Hilfe des sogenannten "Schubabgleichs" bestimmt. Hierbei wird ausgenutzt, dass die Brennkraftmaschine in Schubabschaltphasen der Kraftstoffzufuhr die Lambdasonde mit Luft bespült, und bei dieser somit bekannten Gaszusammensetzung der Fehler des Proportionalitätsfaktors bestimmt. Das Verhältnis zwischen nominalem und tatsächlichem Proportionalitätsfaktor wird als "Abgleichfaktor" gespeichert und zur multiplikativen Korrektur der die 02-Konzentration kennzeichnenden Größe verwendet.

Des Weiteren ist bekannt, dass die Luftfeuchte einen Einfluss auf die Volumenkonzentration bzw. den Molanteil von $O_2$ in der Frischluft hat. Diese Eigenschaft atmosphärischer Luft ergibt sich aus dem Daltonschen Gesetz, wonach der Luftdruck gleich der Summe aller Partialdrücke der Einzelgase ist. Bei konstantem Luftdruck und steigender Luftfeuchte sinken demzufolge der $O_2$-Partialdruck und die $O_2$-Volumenkonzentration (Verdünnungseffekt). Für einen genauen Schubabgleich ist daher die Abhängigkeit des $O_2$-Erwartungswertes von der Luftfeuchte zu berücksichtigen. In der DE 10 2006 011 722 B3 wird eine Möglichkeit beschrieben, wie die Feuchtigkeit der Umgebungsluft beim Ermitteln des Abgleichfaktors berücksichtigt werden kann. Der Abgleichfaktor gehört dann zum Proportionalitätsfaktor für trockene Frischluft. Aus dem Abgleichfaktor für trockene Luft und einem Luftfeuchtigkeitsfaktor kann dann gemäß DE 10 2006 011 722 B3 wiederum der Abgleichfaktor für eine bestimmte Luftfeuchte berechnet werden.

Es gibt allerdings auch Motorsteuergerätefunktionen, bei denen nicht der $O_2$-Messwert selbst verarbeitet wird, sondern lediglich der daraus ermittelte Lambda-Wert. In diesen Fällen ist es unerheblich, dass die Luftfeuchte den Schubabgleich beeinflusst, sofern die multiplikativ verfälschte $O_2$-Konzentration mit den passenden feuchteabhängigen Formeln (1) und (2) in einen korrekten Lambda-Wert umgerechnet wird.

Offenbarung der Erfindung

Der Erfindung liegt der Gedanke zugrunde, die genannte Berechnung des Lambda-Wertes anhand der Formeln (1) und (2) in Kombination mit einem von einem (Luft-)Feuchtesensor gelieferten Messwert bzw. Signal durchzuführen.

Die Erfindung ermöglicht die einfache Anpassung eines gemessenen Lambda-Wertes an nach einem Schubabgleich erfolgende Feuchteänderungen. Die in DE 10 2006 011 722 B3 genannte Bereinigung des Abgleichfaktors um den Feuchteeinfluss ist dadurch nicht mehr erforderlich. Die Erfindung ermöglicht es zudem, den Einfluss relativ schneller Feuchteänderungen auf die Lambda-Erfassung wirksam zu kompensieren.

Die Erfindung kann bevorzugt bei Diesel-Hybrid-Fahrzeugen und konventionellen Dieselfahrzeugen mit der Betriebsart "Segelbetrieb" angewendet werden, sofern die Fahrzeuge mit einem genannten Feuchtesensor ausgestattet sind, denn bei diesen Fahrzeugen wird ein genannter Schubabgleich nur noch selten durchgeführt. Der genannte "Segelbetrieb" entspricht einem verbrauchsarmen Betriebszustand, bei dem die Brennkraftmaschine, d.h. in dem vorliegenden Beispiel der Fahrzeugmotor, in Phasen mit verschwindendem Fahrerwunschmoment nicht in den Schub geht, sondern bei geöffneter Kupplung in den Leerlauf geht oder abgestellt wird und das Fahrzeug aufgrund seiner Trägheit rollt.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1 zeigt ein Blockdiagramm einer im Stand der Technik bekannten Vorrichtung zur Bestimmung des Lambda-Wertes mit einer Breitband-Lambda-Sonde einer Brennkraftmaschine eines Kraftfahrzeugs.

Figuren 2a-c zeigen kombinierte Block- und Funktionsdiagramme von Ausführungsbeispielen des erfindungsgemäßen Verfahrens und der Vorrichtung.

Beschreibung von Ausführungsbeispielen

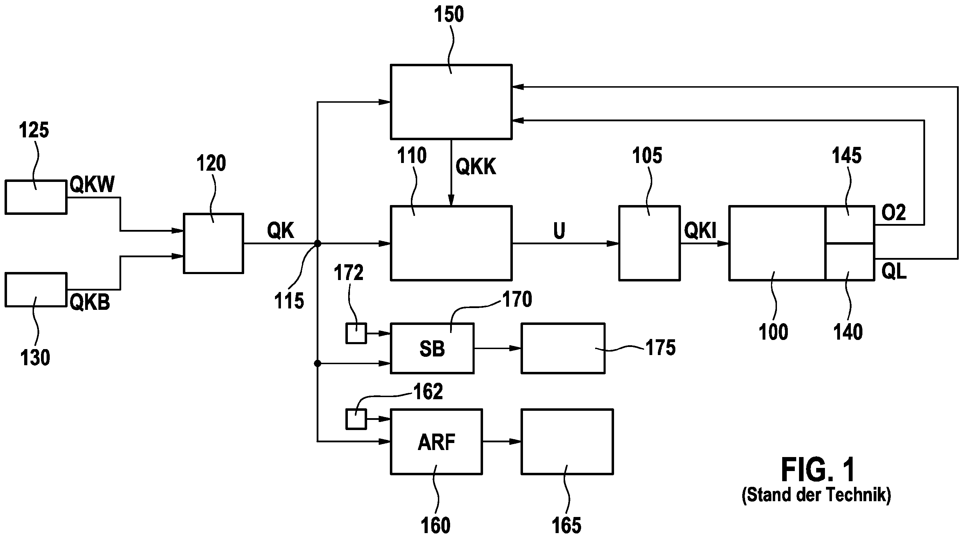

Die Figur 1 zeigt ein Blockdiagramm einer aus der DE-OS 42 08 002 und der DE 198 31 748 A1 bekannten Vorrichtung zur Adaption des Pumpenkennfeldes einer Einspritzpumpe, ausgehend vom Lambda-Wert einer Breitband-Lambda-Sonde. Eine Brennkraftmaschine 100 bekommt von einer Einspritz- oder Kraftstoffpumpe 105 eine bestimme Kraftstoffmenge QKI zugemessen. Die Kraftstoffpumpe 105 steht mit einem Pumpenkennfeld 110 in Verbindung, welches wiederum über einen Verzweigungspunkt 115 mit einer Minimalauswahl 120 in Verbindung steht. Die Minimalauswahl 120 erhält ein Signal QKW von einer Sollwertvorgabe 125 sowie ein Signal QKB von einer Begrenzung 130.

Ein an der Brennkraftmaschine angeordneter Luftmassenmesser 140 liefert eine erste Messgrösse (QL), die die angesaugte Luftmasse charakterisiert. Ein Lambdasensor 145 liefert ein Signal 02, das den Sauerstoffgehalt der Luft charakterisiert. Die genannten Signale werden einer Korrektureinrichtung 150 zugeführt, die ferner das Ausgangssignal QK der Minimalauswahl 120 zugeführt bekommt. Die Korrektureinrichtung 150 beaufschlägt das Pumpenkennfeld 110 mit einem Korrekturwert QKK. Ferner wird das Ausgangssignal der Minimalauswahl QK einer Abgasrückführsteuerstufe 160 sowie einer Spritzbeginnsteuerstufe 170 zugeleitet. Zu der Abgasrückführsteuerstufe 160 gelangen ferner Signale von Sensoren 162. Die Abgasrückführung beaufschlagt einen Abgasrückführsteller 165 mit Signalen. Die Spritzbeginnsteuerstufe 170 erhält Ausgangssignale von verschiedenen Sensoren 172 und beaufschlagt einen Spritzbeginnsteller 175 mit Signalen.

Beim Betrieb dieser Vorrichtung gibt die Sollwertvorgabe 125 einen Kraftstoffmengenwert QKW vor, d.h. die Kraftstoffmenge, die erforderlich ist, um die Brennkraftmaschine mit der vom Fahrer gewünschten Geschwindigkeit bzw. dem gewünschten Moment zu betreiben. Abhängig von verschiedenen Betriebskenngrößen errechnet die Begrenzung 130 eine höchstzulässige Kraftstoffmenge QKB. Diese höchstzulässige Kraftstoffmenge QKB ist so bemessen, dass die Brennkraftmaschine keinen Schaden nimmt bzw. die Abgasemissionen bestimmte Werte nicht überschreiten. Die Minimalauswahl 120 wählt das kleinere der Signale QKW bzw. QKB aus. Hierdurch wird die gewünschte Kraftstoffmenge QKW auf die höchstzulässige Kraftstoffmenge QKB begrenzt. Am Ausgang der Minimalauswahl 120 steht nun der Wert für die einzuspritzende Kraftstoffenge QK an.

Im Pumpenkennfeld 110 ist, abhängig von dem Wert für die einzuspritzende Kraftstoffmenge QK, ein Signal U abgelegt, mit dem die Kraftstoffpumpe bzw. ein Stellorgan der Kraftstoffpumpe 105 beaufschlagt wird. Woraufhin die Kraftstoffpumpe 105 die tatsächliche Kraftstoffmenge QKI der Brennkraftmaschine 100 zumisst.

Am Verzweigungspunkt 115 wird das Signal bezüglich des Wertes für die einzuspritzende Kraftstoffmenge QK weiteren Einrichtungen zugeführt. So gibt die Abgasrückführsteuerstufe 160 abhängig von dem Wert für die einzuspritzende Kraftstoffmenge QK und dem Ausgangssignal von weiteren Sensoren 162 ein Ansteuersignal an das Abgasrückführstellwerk 165. Um eine möglichst abgas- und emissionsfreie Verbrennung realisieren zu können, muss die Abgasrückführrate abhängig von der tatsächlich eingespritzten Kraftstoffmenge gewählt werden.

Ferner ist vorgesehen, dass der Wert für die einzuspritzende Kraftstoffmenge QK der Spritzbeginnsteuerstufe 170 zugeleitet wird. Diese Spritzbeginnsteuerstufe 170 gibt abhängig von zusätzlichen Sensoren 172 ein Ansteuersignal an den Spritzbeginnsteller 175. Auch hier ist es wichtig, dass ein sehr präzises Signal bezüglich der eingespritzten Kraftstoffmenge der Spritzbeginnsteuerstufe zugeführt wird.

Die Sensoren 145 und 140 erfassen verschiedene Betriebskenngrössen und leiten entsprechende Signale an die Korrektureinrichtung 150. Diese Korrektureinrichtung 150 berechnet, ausgehend von den Sensorsignalen und dem Wert für die einzuspritzende Kraftstoffmenge QK, Korrekturwerte QKK, mit denen das Pumpenkennfeld korrigiert wird. Die Korrektur des Pumpenkennfeldes 110 erfolgt derart, dass das Signal bezüglich des Wertes für die einzuspritzende Kraftstoffmenge QK mit der eingespritzten Kraftstoffmenge QKI übereinstimmt.

Um die Emission von Schadstoffen im Abgas weiter zu reduzieren, ist eine möglichst exakte Zuführung von Frischluft anzustreben. Insbesondere bei Dieselbrennkraftmaschinen wird die Ist-Frischluftmasse mittels der Abgasrückführung auf eine Soll-Frischluftmasse geregelt, die entsprechend dem Betriebspunkt des Motors vorgegeben wird. Mittels des Signals 02 des Sensors 145, welches die Sauerstoffkonzentration im Abgas kennzeichnet, sowie der Ist-Frischluftmasse QL, wird die Ist-Einspritzmenge bestimmt. Aufgrund der Kenntnis der Ist-Einspritzmenge können Sollwertfehler für die Abgasrückführung reduziert werden.

Mittels des Luftmassenmessers 140 wird der Massenstrom der feuchten Frischluft erfasst. Für die Verbrennung relevant ist dagegen der um den Wasserdampfmassenstrom korrigierte Massenstrom, der den Anteil der Luft, die für die Verbrennung zur Verfügung steht, kennzeichnet. Das für eine optimale Verbrennung notwendige Luft-Kraftstoff-Verhältnis hängt, wie eingangs beschrieben, ebenfalls von der Luftfeuchte ab.

Die Umrechnung der gemessenen $O_2$-Konzentration in einen Lambda-Wert erfolgt anhand der folgenden Formel (1) (sogenannte "Pischinger-Formel"), wobei in der Formel die physikalisch korrekte $O_2$-Konzentration des Abgases einzusetzen ist:

$$\lambda = \frac{1 + O_{2,Abg}/3}{1 - (1+z)\,O_{2,Abg}} \qquad (1)$$

Dabei ist $O_{2,Abg}$ die Konzentration des Restsauerstoffs im Abgas und die Größe $z = (1 - O_{2,Luft}) / O_{2,Luft}$ mit $/ O_{2,Luft}$ gleich der Sauerstoffkonzentration in der Frischluft.

Da die Sauerstoffkonzentration $/ O_{2,Luft}$ von Frischluft von der Luftfeuchte abhängt, hängt auch die Größe z von der Volumenkonzentration bzw. dem Molanteil w des Wasserdampfs ab und ist wie folgt zu berechnen:

$$z = \frac{z^* + w}{1 - w} \qquad (2)$$

Dabei ist die Konstante $z^* = (1 - 0{,}2095) / 0{,}2095 = 3{,}7733$ der für trockene Luft gültige Wert. Bei Nichtvorhandensein bzw. Nichtverwendung eines Feuchtesensors gemäß dem Stand der Technik wird mittels eines Motorsteuergeräts (MSG) der Wert von Lambda wie folgt berechnet:

$$\lambda_{MSG} = \frac{1 + O_{2,MSG} / 3}{1 - (1 + z^*) O_{2,MSG}} \qquad (3)$$

Dabei ist $O_{2,MSG}$ der $O_2$-Messwert einschließlich des Abgleichfaktors. Wenn der Feuchteeinfluss im Schubabgleich nicht berücksichtigt wird, ergibt sich damit der folgende Zusammenhang zwischen der physikalischen Sauerstoffkonzentration im Abgas und dem im Steuergerät berechneten Lambdawert:

$$\lambda_{MSG} = \frac{1 + \dfrac{1 + F_{O2}}{1 - w_{ALS}} O_{2,Abg} / 3}{1 - (1 + z^*) \dfrac{1 + F_{O2}}{1 - w_{ALS}} O_{2,Abg}} = \frac{1 + \dfrac{1 + F_{O2}}{1 - w_{ALS}} O_{2,Abg} / 3}{1 - (1 + z_{ALS}) (1 + F_{O2}) O_{2,Abg}} \qquad (4)$$

Der Faktor $1 + F_{O2}$ beschreibt den nach dem Schubabgleich noch verbleibenden relativen $O_2$-Fehler, soweit dieser nicht von der Luftfeuchte herrührt. Der Term $1 - w_{ALS}$ ist auf den noch nicht berücksichtigten Feuchteeinfluss auf den Schubabgleich zurückzuführen, wobei $w_{ALS}$ die physikalische Wasserdampf-Volumenkonzentration zum Zeitpunkt des Schubabgleichs repräsentiert (ALS = Abgleich der Lambdasonde im Schub) und $z_{ALS}$ den Wert von z zum selben Zeitpunkt. Da der Wert von $w_{ALS}$ sehr viel kleiner als 1 ist, kann der gegenüber Gleichung (1) zusätzliche Term $1 - w_{ALS}$ im Zähler vernachlässigt werden, und die Umrechnung ist ausreichend genau, sofern der letzte Schubabgleich nicht zu lange zurückliegt und der Wert von $w_{ALS}$ somit noch hinreichend genau der aktuellen Luftfeuchte entspricht. Im Motorsteuergerät liegt dabei nur das Verhältnis $(1 + F_{O2}) / (1 - w_{ALS})$ vor, welches dem Abgleichfaktor bei feuchter Luft entspricht.

Der im Folgenden beschriebene, erfindungsgemäße Ansatz ermöglicht eine präzise Berechnung des Lambda-Wertes auch in dem Fall, dass die genannte zeitliche Bedingung bzw. Voraussetzung den letzten Schubabgleich betreffend nicht erfüllt ist. Dieser Ansatz berücksichtigt den von einem Feuchtesensor gelieferten Feuchtewert.

In einer ersten Ausführungsform wird $O_{2,MSG}$ in Gleichung (3) mittels des Signals eines genannten Feuchtesensors so umskaliert, als würde der Schubabgleich bei der aktuellen Luftfeuchte wiederholt. Da $O_{2,MSG}/3$ deutlich kleiner ist als 1, hat $O_{2,MSG}$ im Zähler von Formel (3) nur einen geringen Einfluss auf den berechneten Lambda-Wert $\lambda_{MSG}$. Dementsprechend ist es in vielen Fällen bereits ausreichend, die Feuchtekorrektur nur im Nenner von Formel (3) vorzunehmen. Dies führt auf die folgende Gleichung (5):

$$\lambda_{MSG} = \frac{1 + O_{2,MSG} / 3}{1 - (1 + z^*) \dfrac{1 - w_{ALS}^{mess}}{1 - w_{akt}^{mess}} O_{2,MSG}} \qquad (5)$$

In Formel (5) ist $w_{akt}^{mess}$ der aktuelle Messwert der Wasserdampf-Volumenkonzentration, $w_{ALS}^{mess}$ die zum Zeitpunkt des Schubabgleichs gemessene Wasserdampf-Volumenkonzentration und $O_{2,MSG}$ der $O_2$-Messwert einschließlich des Abgleichfaktors und damit einschließlich des genannten multiplikativen Feuchtefehlers $1 / (1 - w_{ALS})$. Bei höheren Genauigkeitsansprüchen kann der Zähler in der gleichen Weise korrigiert werden. Dies führt dann auf die nachstehende Formel (6)

$$\lambda_{MSG} = \frac{1 + \dfrac{1 - w_{ALS}^{mess}}{1 - w_{akt}^{mess}}\, O_{2,MSG}\,/\,3}{1 - (1 + z^*)\,\dfrac{1 - w_{ALS}^{mess}}{1 - w_{akt}^{mess}}\, O_{2,MSG}} \qquad (6)$$

In weiteren Ausgestaltungsvarianten der Erfindung wird ausgenutzt, dass w << 1 ist und deswegen zum einen $1\,/\,(1-w) \approx 1 + w$ gilt und zum anderen Produkte zweier Wasserdampf-Volumenkonzentrationen vernachlässigbar sind. In den Formeln (5) und (6) können dementsprechend Ersetzungen gemäß folgender Gleichung (7) vorgenommen werden:

$$\frac{1 - w_{ALS}^{mess}}{1 - w_{akt}^{mess}} = \frac{1 + w_{akt}^{mess}}{1 + w_{ALS}^{mess}} = 1 + w_{akt}^{mess} - w_{ALS}^{mess} \qquad (7)$$

In einer weiteren Ausführungsform des erfindungsgemäßen Verfahrens wird $O_{2,MSG}$ im Zähler nur mit dem Faktor $1 - w_{ALS}^{mess}$ korrigiert. Hierdurch wird die Genauigkeit weiter verbessert. In diesem Fall lautet die Umrechnung erfindungsgemäß wie folgt:

$$\lambda_{MSG} = \frac{1 + (1 - w_{ALS}^{mess})\, O_{2,MSG}\,/\,3}{1 - (1 + z^*)\,\dfrac{1 - w_{ALS}^{mess}}{1 - w_{akt}^{mess}}\, O_{2,MSG}} \qquad (8)$$

Formel (8) entsteht, indem man Gleichung (2) in Gleichung (1) einsetzt und den in $O_{2,MSG}$ enthaltenen Divisor $1 - w_{ALS}$ durch den Faktor $1 - w_{ALS}^{mess}$ bestmöglich kompensiert. Durch abermalige Anwendung der Näherungen gemäß Gleichung (7) können aus Formel (8) weitere Varianten des erfindungsgemäßen Verfahrens abgeleitet werden.

Die vorstehenden Gleichungen (5), (6) und (8) sowie mit Hilfe von Formel (7) daraus erzeugte Modifikationen können als modifizierte "Pischinger"-Formeln aufgefasst werden, welche die Abweichung der Luftfeuchte von einem Referenzwert berücksichtigen. Bei dieser Vorgehensweise wird der $O_2$-Messwert gemäß dem Stand der Technik im Schub auf den Wert 20,95 %, d.h. auf den Volumenprozentanteil von $O_2$ in trockener Luft, abgeglichen, obwohl die Luft feucht sein kann, und der zugehörige Abgleichfaktor in einem nichtflüchtigen Speicher 225 des genannten Motorsteuergeräts abgelegt. Zusätzlich wird dort auch der Referenzwert $w_{ALS}^{mess}$ bzw. eine andere diese Feuchte kennzeichnende Größe gespeichert.

Fahrzeugtaugliche Feuchtesensoren erfassen üblicherweise die relative Luftfeuchte. Diese kann mit Hilfe der ebenfalls zu messenden Ansauglufttemperatur zunächst in die spezifische Luftfeuchtigkeit x (Wasserdampfgehalt) umgerechnet werden. In einem weiteren Berechnungsschritt kann die spezifische Luftfeuchtigkeit in die zugehörige $H_2O$-Volumenkonzentration konvertiert werden.

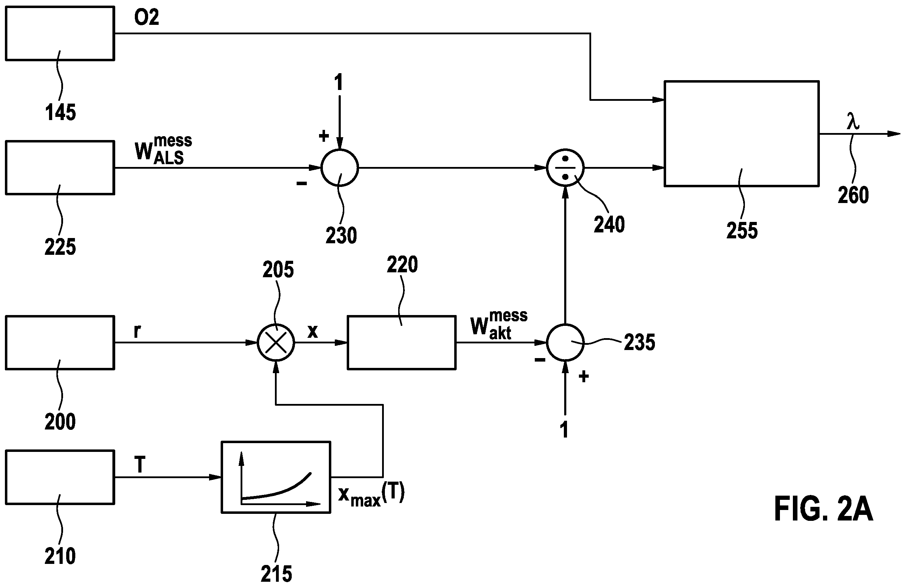

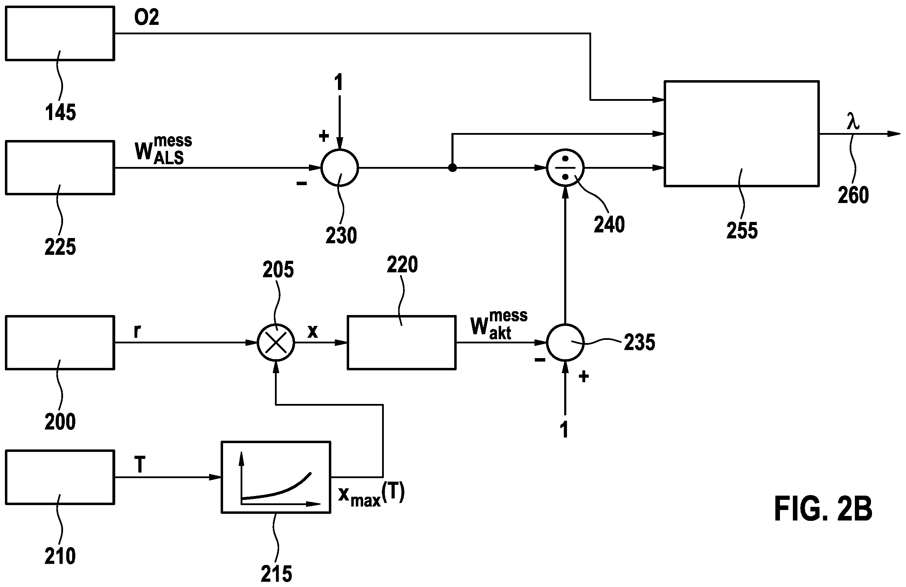

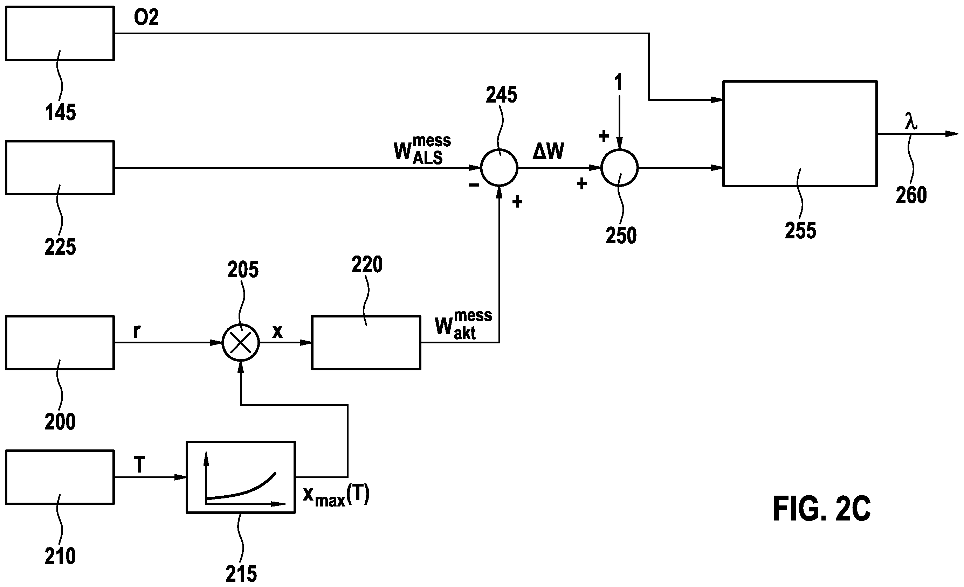

In den Figuren 2a, 2b und 2c sind Ausführungsbeispiele des erfindungsgemäßen Verfahrens und der Vorrichtung anhand einer Signalkette dargestellt. Die Vorrichtung umfasst einen Feuchtesensor 200, welcher ein die relative Feuchte der Ansaugluft der Brennkraftmaschine betreffendes Signal r liefert. Zusätzlich ist ein Temperatursensor 210 angeordnet, welcher die Ansauglufttemperatur T misst. Mittels einer Kennlinie 215 wird die gemessene Temperatur T der Ansaugluft in ein der jeweils gemessenen Temperatur entsprechendes Signal der Sättigungsfeuchte $x_{max}(T)$ umgewandelt.

Die beiden Signale r und $x_{max}(T)$ werden einem multiplikativen Verknüpfungspunkt 205 zugeführt. Durch diese Multiplikation wird aus der relativen Feuchte r ein die spezifische Feuchte betreffendes Signal x gebildet. Das Signal x wird mittels eines ersten Berechnungsmoduls 220 in einen Wert $w_{akt}^{mess}$ für die aktuelle Wasserdampf-Volumenkonzentration umgewandelt. Der dabei angewendete Umrechnungsfaktor $[1{,}607x\,/\,(1 + 1{,}607x)]$ ergibt sich aus der thermischen Zustandsgleichung $p * V = m * R * T$ für Wasserdampf und trockene Luft, wobei der Koeffizient 1,607 das Verhältnis der spezifischen Gaskonstanten $R_W$ und $R_L$ für Wasserdampf bzw. Luft angibt. Das entsprechende Signal $w_{akt}^{mess}$ sowie der in einem Speicher 225, wie oben beschrieben, bereits abgelegte und während des Schubabgleichs bestimmte Referenzwert $w_{ALS}^{mess}$ der $H_2O$-Konzentration werden je nach Ausführungsform weiteren, nachfolgend beschriebenen Verknüpfungspunkten zugeführt, bevor damit in einem zweiten Berechnungsmodul 255 ein gemessener und durch den Schubabgleich korrigierter $O_2$-Messwert 'O2' der Lambda-Sonde 145 in einen Lambda-Wert 260 umgerechnet wird.

Im Ausführungsbeispiel gemäß Figur 2a wird der Referenzwert $w_{ALS}^{mess}$ einem differenzbildenden Verknüp-

fungspunkt 230 zugeführt und dort vom Wert 1 subtrahiert. Entsprechend wird die aktuelle Wasserdampf-Volumenkonzentration $w^{mess}_{akt}$ einem differenzbildenden Verknüpfungspunkt 235 zugeführt und dort vom Wert 1 subtrahiert. Beide genannten Differenzen werden einem dividierenden Verknüpfungspunkt 240 zugeführt, welcher einen die Feuchteänderung kennzeichnenden Quotienten bildet. Dieser Quotient wird dem Berechnungsmodul 255 zugeführt, welches anhand von Formel (5) oder (6) den $O_2$-Messwert 02 (bzw. $O_{2,MSG}$) in einen Lambda-Wert 260 umrechnet.

Im zweiten Ausführungsbeispiel gemäß Figur 2b wird gegenüber Figur 2a im Berechnungsmodul Formel (8) anstelle von Formel (5) oder (6) verwendet. Dem Berechnungsmodul 255 wird in diesem Fall zusätzlich die vom Verknüpfungspunkt 230 gebildete Differenz $1 - w^{mess}_{ALS}$ zugeführt.

Im dritten Ausführungsbeispiel gemäß Figur 2c werden $w^{mess}_{akt}$ und $w^{mess}_{ALS}$ gemäß Formel (7) einem differenzbildenden Verknüpfungspunkt 245 zugeführt, mittels dessen die Differenz $\Delta w = w^{mess}_{akt} - w^{mess}_{ALS}$ gebildet wird. Diese Differenz wiederum wird dem Verknüpfungspunkt 250 zugeführt, der einen konstanten Wert von 1 addiert. Im Berechnungsmodul 255 wird der Lambda-Wert 260 in diesem Fall mittels der entsprechenden Variante von Formel (5) oder (6) aus 02 (bzw. $O_{2,MSG}$) und dem Faktor $1 + \Delta w$ berechnet.

Der so bestimmte Lambda-Wert kann in an sich bekannter Weise im Rahmen einer Lambda-Regelung oder einer Lambda-basierten Adaption wie beispielsweise der genannten Pumpenkennfeldadaption einer Brennkraftmaschine eines Kraftfahrzeugs oder einer beliebigen anderen Anwendung, welche einen genauen Lambda-Wert benötigt, weiterverarbeitet werden.

## Patentansprüche

1. Verfahren zur Bestimmung des Lambda-Wertes mit einer Breitband-Lambda-Sonde einer Brennkraftmaschine insbesondere eines Kraftfahrzeugs, wobei ein von der Lambda-Sonde gelieferter Messstrom proportional zum Sauerstoffgehalt oder Fettgasgehalt im Abgas der Brennkraftmaschine ist und wobei der entsprechende Proportionalitätsfaktor mittels eines Schubabgleichs ermittelt wird, **dadurch gekennzeichnet, dass** der Schubabgleich, unabhängig von einer tatsächlich vorliegenden Luftfeuchte, die $O_2$-Konzentration von trockener Luft als Referenz verwendet und dass der Lambda-Wert anhand der Formel $\lambda = \dfrac{1 + O_{2,Abg}/3}{1 - (1+z)\, O_{2,Abg}}$ berechnet wird, in der $O_{2,Abg}$ die Konzentration des Restsauerstoffs im Abgas ist und wobei $z = \dfrac{z^* + w}{1 - w}$ mit $z^* = 3,7733$, wobei w den Molanteil des Wasserdampfes in der Frischluft angibt, wobei in der Formel ein von einem Feuchtesensor (200) geliefertes Signal berücksichtigt wird.

2. Verfahren nach Anspruch 1, **dadurch gekennzeichnet, dass** die Berechnung anhand der Umrechnungsformel

$$\lambda_{MSG} = \frac{1 + O_{2,MSG}/3}{1 - (1 + z^*)\, \dfrac{1 - w^{mess}_{ALS}}{1 - w^{mess}_{akt}}\, O_{2,MSG}}$$

erfolgt, wobei $w^{mess}_{akt}$ den aktuellen Messwert der Wasserdampf-Volumenkonzentration, $w^{mess}_{ALS}$ die zum Zeitpunkt des Schubabgleichs gemessene Wasserdampf-Volumenkonzentration und $O_{2,MSG}$ den in einem Steuergerät der Brennkraftmaschine vorliegenden $O_2$-Messwert bezeichnet.

3. Verfahren nach Anspruch 1, **dadurch gekennzeichnet, dass** die Berechnung anhand der Umrechnungsformel

$$\lambda_{MSG} = \frac{1 + \dfrac{1 - w^{mess}_{ALS}}{1 - w^{mess}_{akt}}\, O_{2,MSG}/3}{1 - (1 + z^*)\, \dfrac{1 - w^{mess}_{ALS}}{1 - w^{mess}_{akt}}\, O_{2,MSG}}$$

erfolgt, wobei $w^{mess}_{akt}$ den aktuellen Messwert der Wasserdampf-Volumenkonzentration, $w^{mess}_{ALS}$ die zum Zeitpunkt des Schubabgleichs gemessene Wasserdampf-Volumenkonzentration und $O_{2,MSG}$ den in einem Steuergerät der Brennkraftmaschine vorliegenden $O_2$-Messwert bezeichnet.

**4.** Verfahren nach Anspruch 1, **dadurch gekennzeichnet, dass** die Berechnung anhand der Umrechnungsformel

$$\lambda_{MSG} = \frac{1 + (1 - w^{mess}_{ALS})\, O_{2,MSG}\, / \, 3}{1 - (1 + z^{\star})\, \dfrac{1 - w^{mess}_{ALS}}{1 - w^{mess}_{akt}}\, O_{2,MSG}}$$

erfolgt, wobei $w^{mess}_{akt}$ den aktuellen Messwert der Wasserdampf-Volumenkonzentration, $w^{mess}_{ALS}$ die zum Zeitpunkt des Schubabgleichs gemessene Wasserdampf-Volumenkonzentration und $O_{2,MSG}$ den in einem Steuergerät der Brennkraftmaschine vorliegenden $O_2$-Messwert bezeichnet.

**5.** Verfahren nach einem der Ansprüche 2 bis 4 **dadurch gekennzeichnet, dass** der die Feuchteänderung seit dem letzten Schubabgleich betreffende Quotient $(1 - w^{mess}_{ALS}) / (1 - w^{mess}_{akt})$ durch den Quotienten $(1 + w^{mess}_{akt}) / (1 + w^{mess}_{ALS})$ ersetzt wird.

**6.** Verfahren nach einem der Ansprüche 2 bis 4 **dadurch gekennzeichnet, dass** der die Feuchteänderung seit dem letzten Schubabgleich betreffende Quotient $(1 - w^{mess}_{ALS}) / (1 - w^{mess}_{akt})$ durch den Ausdruck $1 + w^{mess}_{akt} - w^{mess}_{ALS}$ ersetzt wird.

**7.** Verfahren nach einem der vorhergehenden Ansprüche, **dadurch gekennzeichnet, dass** ein von dem Feuchtesensor (200) geliefertes, die relative Feuchte der Ansaugluft der Brennkraftmaschine betreffendes Signal r sowie eine Sättigungsfeuchte $x_{max}(T)$, einem multiplikativen Verknüpfungspunkt (205) zugeführt werden, wobei ein die spezifische Feuchte betreffendes Signal x gebildet wird, dass das Signal x in einen Wert $w^{mess}_{akt}$ für die aktuelle Wasserdampf-Volumenkonzentration umgewandelt wird, dass aus dem Wert $w^{mess}_{akt}$ und einem Referenzwert $w^{mess}_{ALS}$ der $H_2O$-Konzentration eine die Feuchteänderung seit dem letzten Schubabgleich betreffende Größe gebildet wird, und dass aus einem vom Schubabgleich korrigierten Sauerstoff-Messwert sowie aus die Feuchte und/oder die Feuchteänderung betreffenden Größen gemäß einer der Formeln nach den Ansprüchen 2 bis 6 ein Lambda-Wert (260) berechnet wird.

**8.** Verfahren nach Anspruch 7, **dadurch gekennzeichnet, dass** eine von einem Temperatursensor (210) gelieferte Ansauglufttemperatur T mittels einer Kennlinie (215) in die entsprechende Sättigungsfeuchte $x_{max}(T)$ umgewandelt wird.

**9.** Vorrichtung zur Bestimmung des Lambda-Wertes mit einer Breitband-Lambda-Sonde einer Brennkraftmaschine insbesondere eines Kraftfahrzeugs, **gekennzeichnet durch** Berechnungsmittel zur Berechnung des Lambda-Wertes anhand des Verfahrens nach einem der vorhergehenden Ansprüche, wobei in der Umrechnungsformel ein von einem Feuchtesensor (200) geliefertes die relative Luftfeuchte der Ansaugluft der Brennkraftmaschine betreffendes Signal r berücksichtigt ist.

**10.** Vorrichtung nach Anspruch 9, **dadurch gekennzeichnet, dass** in der Umrechnungsformel ein von einem Temperatursensor (210) geliefertes die Ansauglufttemperatur T der Brennkraftmaschine betreffendes Signal berücksichtigt ist.

**11.** Steuereinrichtung zur Bestimmung des Lambda-Wertes mit einer Breitband-Lambda-Sonde einer Brennkraftmaschine insbesondere eines Kraftfahrzeugs, **gekennzeichnet durch** eine Vorrichtung nach Anspruch 9 oder 10.

**12.** Computerprogramm, das alle Schritte eines Verfahrens nach einem der Ansprüche 1 bis 8 ausführt, wenn es auf einer Steuereinrichtung nach Anspruch 11 abläuft.

**13.** Computerprogrammprodukt mit Programmcode, der auf einem maschinenlesbaren Träger gespeichert ist, zur Durchführung des Verfahrens nach einem der Ansprüche 1 bis 8, wenn das Programm auf einer Steuereinrichtung nach Anspruch 11 ausgeführt wird.

**Claims**

1. Method for determining the lambda value with a broadband lambda sensor of an internal combustion engine, in particular of a motor vehicle, wherein a measuring current which is supplied by the lambda sensor is proportionate to the oxygen content or rich gas content in the exhaust gas of the internal combustion engine, and wherein the corresponding proportionality factor is determined by means of a thrust adjustment, **characterized in that** the thrust adjustment uses the $O_2$ concentration of dry air as a reference independently of the air humidity which is actually present, and **in that** the lambda value is calculated on the basis of the formula

$$\lambda = \frac{1 + O_{2,Adj}/3}{1 - (1+z)O_{2,Adj}}$$

in which $O_{2,Adj}$ is the concentration of the residual oxygen in the exhaust gas and wherein

$$z = \frac{z^* + w}{1 - w}$$

where $z^* = 3.7733$, where $w$ specifies the mole content of the water vapour in the fresh air, wherein a signal which is supplied by a humidity sensor (200) is taken into account in the formula.

2. Method according to Claim 1, **characterized in that** the calculation is carried out on the basis of the conversion formula

$$\lambda_{MCU} = \frac{1 + O_{2,MCU}/3}{1 - (1 + z^*)\dfrac{1 - w_{ALS}^{meas}}{1 - w_{cur}^{meas}} O_{2,MCU}}$$

where $w^{meas}_{cur}$ denotes the current measured value of the water vapour volume concentration, $w^{meas}_{ALS}$ denotes the water vapour volume concentration measured at the time of the thrust adjustment, and $O_{2,MCU}$ denotes the $O_2$ measured value present in a control unit of the internal combustion engine.

3. Method according to Claim 1, **characterized in that** the calculation is carried out on the basis of the conversion formula

$$\lambda_{MCU} = \frac{1 + \dfrac{1 - w_{ALS}^{meas}}{1 - w_{cur}^{meas}} O_{2,MCU}/3}{1 - (1 + z^*)\dfrac{1 - w_{ALS}^{meas}}{1 - w_{cur}^{meas}} O_{2,MCU}}$$

where $w^{meas}_{cur}$ denotes the current measured value of the water vapour volume concentration, $w^{meas}_{ALS}$ denotes the water vapour volume concentration measured at the time of the thrust adjustment, and $O_{2,MCU}$ denotes the $O_2$ measured value present in a control unit of the internal combustion engine.

4. Method according to Claim 1, **characterized in that** the calculation is carried out on the basis of the conversion formula

$$\lambda_{MCU} = \frac{1 + (1 - w_{ALS}^{meas}) O_{2,MCU} / 3}{1 - (1 + z^{\cdot}) \dfrac{1 - w_{ALS}^{meas}}{1 - w_{cur}^{meas}} O_{2,MCU}}$$

where $w_{cur}^{meas}$ denotes the current measured value of the water vapour volume concentration, $w_{ALS}^{meas}$ denotes the water vapour volume concentration measured at the time of the thrust adjustment, and $O_{2,MCU}$ denotes the $O_2$ measured value present in a control unit of the internal combustion engine.

5. Method according to one of Claims 2 to 4, **characterized in that** the quotient $(1 - w_{ALS}^{meas}) / (1 - w_{cur}^{meas})$, which relates to the change in humidity since the last thrust adjustment, is replaced by the quotient $(1 + w_{cur}^{meas}) / (1 + w_{ALS}^{meas})$.

6. Method according to one of Claims 2 to 4, **characterized in that** the quotient $(1 - w_{ALS}^{meas}) / (1 - w_{cur}^{meas})$, which relates to the change in humidity since the last thrust adjustment, is replaced by the expression $1 + w_{cur}^{meas} - w_{ALS}^{meas}$.

7. Method according to one of the preceding claims, **characterized in that** a signal r which is supplied by the humidity sensor (200) and relates to the relative humidity of the intake air of the internal combustion engine and a saturation humidity $x_{max}(T)$ are fed to a multiplicative combination point (205), wherein a signal x relating to the specific humidity is formed, **in that** the signal x is converted into a value $w_{cur}^{meas}$ for the current water vapour volume concentration, **in that** a variable which relates to the change in humidity since the last thrust adjustment is formed from the value $w_{cur}^{meas}$ and a reference value $w_{ALS}^{meas}$ of the $H_2O$ concentration, and **in that** a lambda value (260) is calculated from an oxygen measured value which is corrected by the thrust adjustment and from the humidity and/or the variables which relate to the change in humidity, in accordance with one of the formulas according to Claims 2 to 6.

8. Method according to Claim 7, **characterized in that** an intake air temperature T which is supplied by a temperature sensor (210) is converted into the corresponding saturation humidity $x_{max}(T)$ by means of a characteristic curve (215).

9. Device for determining the lambda value with a broadband lambda probe of an internal combustion engine, in particular of a motor vehicle, **characterized by** calculation means for calculating the lambda value by means of the method according to one of the preceding claims, wherein a signal r which is supplied by a humidity sensor (200) and relates to the relative air humidity of the intake air of the internal combustion engine is taken into account in the conversion formula.

10. Device according to Claim 9, **characterized in that** a signal which is supplied by a temperature sensor (210) and relates to the intake air temperature T of the internal combustion engine is taken into account in the conversion formula.

11. Control device for determining the lambda value with a broadband lambda probe of an internal combustion engine, in particular of a motor vehicle, **characterized by** a device according to Claim 9 or 10.

12. Computer program which excludes all the steps of a method according to one of Claims 1 to 8 when it runs on a control device according to Claim 11.

13. Computer program product with a program code which is stored on a machine-readable carrier, for carrying out the method according to one of Claims 1 to 8 when the program is executed on a control device according to Claim 11.

**Revendications**

1. Procédé de détermination de la valeur lambda au moyen d'une sonde lambda à large bande d'un moteur à combustion interne, notamment d'un véhicule automobile, dans lequel un courant de mesure délivré par la sonde lambda est proportionnel à la teneur en oxygène ou à la teneur en gaz gras dans le gaz d'échappement du moteur à combustion interne et dans lequel le facteur de proportionnalité correspondant est déterminé au moyen d'un équilibrage de poussée, **caractérisé en ce que** l'équilibrage de poussée utilise la concentration en $O_2$ de l'air sec en tant que référence indépendamment d'une humidité de l'air effectivement présente et **en ce que** la valeur lambda est calculée sur la base de la formule $\lambda = \dfrac{1 + O_{2,Abg}/3}{1 - (1+z)O_{2,Abg}}$ , dans laquelle $O_{2,Abg}$ est la concentration de l'oxygène résiduel dans le gaz d'échappement et dans laquelle $z = \dfrac{z^* + w}{1 - w}$ avec z*=3,7733, dans lequel w indique la partie molaire de la vapeur d'eau dans l'air frais, dans lequel un signal délivré par un capteur d'humidité (200) est pris en compte dans la formule.

2. Procédé selon la revendication 1, **caractérisé en ce que** le calcul est effectué sur la base de la formule de conversion suivante :

$$\lambda_{MSG} = \frac{1 + O_{2,MSG}/3}{1 - (1+z^*)\dfrac{1 - w_{ALS}^{mess}}{1 - w_{akt}^{mess}}O_{2,MSG}}$$

où $w_{akt}^{mess}$ désigne la valeur de mesure actuelle de la concentration volumique de vapeur d'eau, $w_{ALS}^{mess}$ représente la concentration volumique de vapeur d'eau mesurée à l'instant de l'équilibrage de poussée et $O_{2,MSG}$ désigne la valeur de mesure du $O_2$ présent dans un appareil de commande du moteur à combustion interne.

3. Procédé selon la revendication 1, **caractérisé en ce que** le calcul est effectué sur la base de la formule suivante :

$$\lambda_{MSG} = \frac{1 + \dfrac{1 - w_{ALS}^{mess}}{1 - w_{akt}^{mess}}O_{2,MSG}/3}{1 - (1+z^*)\dfrac{1 - w_{ALS}^{mess}}{1 - w_{akt}^{mess}}O_{2,MSG}}$$

où $w_{akt}^{mess}$ désigne la valeur de mesure actuelle de la concentration volumique de vapeur d'eau, $w_{ALS}^{mess}$ désigne la concentration volumique de vapeur d'eau mesurée à l'instant de la compensation de poussée et $O_{2,MSG}$ désigne la valeur de mesure du $O_2$ présent dans un appareil de commande du moteur à combustion interne.

4. Procédé selon la revendication 1, **caractérisé en ce que** le calcul est effectué sur la base de la formule de conversion suivante :

$$\lambda_{MSG} = \frac{1 + (1 - w_{ALS}^{mess})O_{2,MSG}/3}{1 - (1+z^*)\dfrac{1 - w_{ALS}^{mess}}{1 - w_{akt}^{mess}}O_{2,MSG}}$$

où $w_{akt}^{mess}$ désigne la valeur de mesure actuelle de la concentration volumique de vapeur d'eau, $w_{ALS}^{mess}$ désigne la concentration volumique de vapeur d'eau mesurée à l'instant de l'équilibrage de poussée et $O_{2,MSG}$ désigne la valeur de mesure du $O_2$ présent dans un appareil de commande du moteur à combustion interne.

5. Procédé selon l'une quelconque des revendications 2 à 4, **caractérisé en ce que** le quotient $(1 - w_{ALS}^{mess})/(1 - w_{akt}^{mess})$ concernant la variation d'humidité depuis le dernier équilibrage de poussée est remplacé par le quotient $(1 + w_{akt}^{mess})/(1 + w_{ALS}^{mess})$ .

**6.** Procédé selon l'une quelconque des revendications 2 à 4, **caractérisé en ce que** le quotient $(1 - w_{ALS}^{mess}) / (1 - w_{akt}^{mess})$ concernant la variation d'humidité depuis le dernier équilibrage de poussée est remplacé par l'expression $1 + w_{akt}^{mess} - w_{ALS}^{mess}$.

**7.** Procédé selon l'une quelconque des revendications précédentes, **caractérisé en ce qu'**un signal r délivré par le capteur d'humidité (200) et concernant l'humidité relative de l'air d'admission du moteur à combustion interne ainsi qu'une humidité à saturation $x_{max}(T)$ sont fournis à un point de combinaison multiplicatif (205), dans lequel un signal x concernant l'humidité spécifique est établi, **en ce que** le signal x est converti en une valeur $w_{akt}^{mess}$ pour la concentration volumique de vapeur d'eau actuelle, **en ce qu'**une grandeur concernant la variation d'humidité depuis le dernier équilibrage de poussée est établi à partir de la valeur $w_{akt}^{mess}$ et d'une valeur de référence $w_{ALS}^{mess}$ de la concentration de $H_2O$, et **en ce qu'**une valeur lambda (260) est établie à partir d'une valeur de mesure d'oxygène corrigée par la compensation de poussée ainsi qu'à partir de l'humidité et/ou de la grandeur concernant la variation d'humidité conformément à l'une des formules selon les revendications 2 à 6.

**8.** Procédé selon la revendication 7, **caractérisé en ce qu'**une température de l'air d'admission T délivrée par un capteur de température (210) est convertie au moyen d'une courbe caractéristique (215) en une humidité à saturation $x_{max}(T)$ correspondante.

**9.** Dispositif pour la détermination de la valeur lambda au moyen d'une sonde lambda à large bande d'un moteur à combustion interne, notamment d'un véhicule automobile, **caractérisé par** des moyens de calcul destinés à calculer la valeur lambda sur la base du procédé selon l'une quelconque des revendications précédentes, dans lequel un signal r délivré par un capteur d'humidité (200) et concernant l'humidité relative de l'air d'admission du moteur à combustion interne est pris en compte dans la formule de conversion.

**10.** Dispositif selon la revendication 9, **caractérisé en ce qu'**un signal délivré par un capteur de température (210) et concernant la température T de l'air d'admission du moteur à combustion interne est pris en compte dans la formule de conversion.

**11.** Dispositif de commande destiné à déterminer la valeur lambda au moyen d'une sonde lambda à large bande d'un moteur à combustion interne en particulier d'un véhicule automobile, **caractérisé par** un dispositif selon la revendication 9 ou 10.

**12.** Programme d'ordinateur qui met en oeuvre toutes les étapes d'un procédé selon l'une quelconque des revendications 1 à 8 lorsqu'il est exécuté sur un dispositif de commande selon la revendication 11.

**13.** Produit de programme d'ordinateur comportant un code de programme qui est stocké sur un support lisible par machine, pour mettre en oeuvre le procédé selon l'une quelconque des revendications 1 à 8 lorsque le programme est exécuté sur un dispositif de commande selon la revendication 11.

**FIG. 1**
(Stand der Technik)

EP 2 964 937 B1

FIG. 2A

FIG. 2B

FIG. 2C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10216724 C1
- DE 4208002 A
- DE 10331159 A1
- DE 19831748 A1
- DE 102005050269 A1
- DE 102006011722 B3